# EUROPÄISCHE PATENTSCHRIFT

(11) **EP 3 058 411 B1**
(45) Veröffentlichungstag und Bekanntmachung des Hinweises auf die Patenterteilung: **01.12.2021**
(21) Anmeldenummer: 14784451.8
(22) Anmeldetag: 15.10.2014
(51) Int. Cl.: G02B 19/00, F21V 13/04, G02B 3/08, F21W 131/402, G02B 3/04, F21V 7/09, F21Y 101/00, F21Y 115/10, F21V 5/04, F21V 7/24, F21V 7/28

(54) **OPTISCHES SYSTEM FÜR EINE LED-LICHTQUELLE SOWIE LEUCHTE MIT EINEM SOLCHEN OPTISCHEN SYSTEM**
OPTICAL SYSTEM FOR AN LED LIGHT SOURCE AND LUMINAIRE COMPRISING SUCH AN OPTICAL SYSTEM
SYSTÈME OPTIQUE POUR SOURCE LUMINEUSE À LED AINSI QUE LAMPE ÉQUIPÉE D'UN TEL SYSTÈME OPTIQUE

(30) Priorität: 18.10.2013 DE 102013221163
(43) Veröffentlichungstag der Anmeldung: 24.08.2016
(73) Patentinhaber: Zumtobel Lighting GmbH, 6850 Dornbirn (AT)
(72) Erfinder: GASSNER, Patrik, A-6722 St. Gerold (AT); HAGENBRING, Melanie, 1011 LM Amsterdam (NL)
(74) Vertreter: Thun, Clemens
(86) Internationale Anmeldenummer: PCT/EP2014/072077
(87) Internationale Veröffentlichungsnummer: WO 2015/055693

(56) Entgegenhaltungen:
- CN-U- 201 811 101
- CN-U- 202 188 357
- US-A1- 2005 168 986
- US-A1- 2011 255 290

## Beschreibung

Die Erfindung betrifft ein optisches System zur Beeinflussung eines, von einer LED-Lichtquelle (LED: Licht emittierende Diode) abgegebenen Lichts, das eine Linse und einen topfartigen Reflektor umfasst. Weiterhin betrifft die Erfindung eine Leuchte mit einem solchen optischen System.

Aus dem Stand der Technik ist eine Rasterleuchte bekannt, bei der das von einer Lichtquelle bzw. mehreren Lichtquellen der Leuchte erzeugte Licht über das Raster in einen Außenraum der Leuchte abgegeben wird; das Raster ist dabei durch mehrere, in einer Ebene angeordnete, topfartige Reflektoren gebildet. Für einen Benutzer einer solchen Leuchte ist in der Praxis regelmäßig wesentlich, welches Lichterscheinungsbild sich mit der Leuchte auf einer Oberfläche, beispielsweise einer Arbeitsfläche erzeugen lässt. Ein solches Lichterscheinungsbild wird im Allgemeinen als mehr oder weniger angenehm empfunden.

Aus der CN 201 811 101 U ist eine Leuchte mit einer LED-Lichtquelle, einer Linse und einem topfartigen Reflektor bekannt. Der Reflektor bildet eine Lichtaustrittsöffnung und ist um die Linse herum angeordnet. Ein Teil des von der LED-Lichtquelle abgegebenen Lichts wird auf dem Weg zwischen der Linse und der Lichtaustrittsöffnung nicht vom Reflektor reflektiert. Aus der CN 202 188 357 U ist eine weitere LED-Leuchte mit einer Linse und einem Reflektor bekannt.

Der Erfindung liegt die Aufgabe zugrunde, ein verbessertes optisches System zur Beeinflussung eines, von einer LED-Lichtquelle abgegebenen Lichts, sowie eine entsprechende Leuchte anzugeben. Insbesondere soll sich das System bzw. die Leuchte dazu eignen, ein besonders ansprechendes Lichterscheinungsbild zu erzeugen.

Diese Aufgabe wird gemäß der Erfindung mit dem im unabhängigen Anspruch 1 genannten Gegenstand gelöst. Besondere Ausführungsarten der Erfindung sind in den abhängigen Ansprüchen angegeben.

Gemäß der Erfindung ist ein optisches System zur Beeinflussung eines, von einer LED-Lichtquelle abgegebenen Lichts vorgesehen. Das optische System weist eine Linse zur Beeinflussung des Lichts auf, sowie einen topfartigen Reflektor, durch dessen Form eine Hauptachse festgelegt ist. Der Reflektor weist nach innen weisende, reflektierende Flächenbereiche auf und bildet mit Bezug auf die Hauptachse auf einer ersten Seite eine Lichtaustrittsöffnung. Dabei ist die Linse auf einer, der ersten Seite gegenüberliegenden zweiten Seite des Reflektors angeordnet, und zwar derart, dass das Licht nach Austritt aus der Linse einen Weg zu der Lichtaustrittsöffnung zurücklegt und anschließend durch Letztere hindurch den Reflektor verlässt. Das optische System ist dabei derart gestaltet, dass das Licht auf dem Weg zwischen der Linse und der Lichtaustrittsöffnung zu einem überwiegenden Teil nicht an den reflektierenden Flächenbereichen des Reflektors reflektiert wird und lediglich zu einem weiteren, kleineren Teil an den reflektierenden Flächenbereichen des Reflektors reflektiert wird. Ferner ist der Reflektor so gestaltet ist, dass in einem Schnitt durch die Hauptachse die reflektierenden Flächenbereiche eine Glockenform beschreiben, wobei für die Erstreckung der Linse parallel zur Hauptachse gilt: 0,2H < h < 0,3 H, wobei H der Erstreckung des Reflektors entlang der Hauptachse entspricht, und wobei - in einem Schnitt durch die Hauptachse betrachtet - die Erstreckung der Linse normal zu der Hauptachse wenigstens 40% der Erstreckung der Lichtaustrittsöffnung beträgt. Zudem ist die LED-Lichtquelle derart ausgebildet, dass das von der LED-Lichtquelle erzeugte und abgegebene Licht von oben her in die Linse einstrahlt, und dass die Linse die Hauptachse durchsetzend angeordnet ist. Weiterhin ist der Reflektor mit Bezug auf die Hauptachse rotationssymmetrisch geformt oder weist in einem Querschnitt normal zu der Hauptachse eine quadratische, rechteckige oder elliptische Form auf, wobei der Reflektor derart angeordnet ist, dass die reflektierenden Flächenbereiche teilweise die Linse ringartig umgeben.

Durch die erfindungsgemäße Gestaltung lässt sich erzielen, dass die Lichtabgabe des optischen Systems in erster Linie bzw. hauptsächlich durch die Linse bestimmt ist. Der Einfluss des Reflektors ist somit entsprechend reduziert; in Zusammenhang mit der Erzeugung des Lichterscheinungsbilds lässt sich durch diese Gestaltung eine Ausbildung von unerwünschten harten Schattenkanten vermeiden oder doch wenigstens deutlich reduzieren. Dabei lässt sich dennoch ein Mindestabschirmwinkel für die Lichtabgabe gewährleisten. Auch lässt sich mit dem Reflektor Einfluss auf die Lichtverteilung in Form einer "Feinabstimmung" nehmen.

Vorzugsweise beträgt dabei der überwiegende Teil wenigstens 80%, insbesondere wenigstens 90%. Der weitere kleinere Teil beträgt vorzugsweise zwischen 1% und 9%, insbesondere zwischen 3% und 7%. Auf diese Weise lassen sich besonders gute Ergebnisse erzielen.

Der Reflektor ist erfindungsgemäß derart angeordnet, dass die reflektierenden Flächenbereiche teilweise die Linse ringartig umgeben. Auf diese Weise lässt sich erzielen, dass seitlich aus der Linse austretende Lichtanteile besonders geeignet mit den entsprechenden Flächenbereichen des Reflektors gezielt beeinflusst werden können.

Vorzugsweise sind die reflektierenden Flächenbereiche des Reflektors diffus reflektierend bzw. streuend. Auf diese Weise lässt sich eine Ausbildung harter Schattenkanten besonders effektiv reduzieren bzw. vermeiden. Vorteilhaft können hierzu die reflektierenden Flächenbereiche des Reflektors weiß sein.

Alternativ können die reflektierenden Flächenbereiche des Reflektors allerdings auch spiegelnd reflektierend gestaltet sein. Hierdurch lässt sich eine weitergehend verbesserte Entblendung erzielen.

Je nachdem, in welcher Weise der Reflektor die Lichtabstrahlung beeinflussen soll, können also unterschiedliche Materialien für den Reflektor verwendet werden bzw. die reflektierenden Eigenschaften in unterschiedlicher Weise realisiert werden. Herstellungstechnisch vorteilhaft sind die reflektierenden Flächenbereiche des Reflektors durch eine Beschichtung gebildet; beispielsweise können sie durch eine - in der Regel hochglänzende - Lackierung oder eine - üblicherweise eher mattierte - Pulverbeschichtung gebildet sein.

Erfindungsgemäß ist der Reflektor also so gestaltet, dass in einem Schnitt durch die Hauptachse die reflektierenden Flächenbereiche eine Glockenform beschreiben.

Hierdurch lässt sich eine besonders geeignete Beeinflussung der Lichtverteilung durch den Reflektor bewirken.

Erfindungsgemäß ist der Reflektor mit Bezug auf die Hauptachse rotationssymmetrisch geformt; alternativ kann er in einem Querschnitt normal zu der Hauptachse eine quadratische, bzw. allgemein eine rechteckige oder elliptische Form aufweisen.

Die Linse besteht vorzugsweise aus einem klaren Material, beispielsweise aus Kunststoff oder Glas. Das ist insbesondere mit Bezug auf den lichttechnischen Wirkungsgrad der Leuchte vorteilhaft.

Vorzugsweise ist das optische System derart gestaltet, dass - in einem Schnitt durch die Hauptachse betrachtet - eine die Linse berührende Tangente, die auf der gegenüberliegenden Seite der Hauptachse durch den Randpunkt der Lichtaustrittsöffnung gelegt ist, mit der Hauptachse einen Winkel einschließt, der höchstens 60° beträgt. Durch diese Gestaltung lässt sich besonders geeignet ein Mindestabschirmwinkel realisieren.

Gemäß einem weiteren Aspekt der Erfindung ist eine Leuchte vorgesehen, die eine LED-Lichtquelle und ein erfindungsgemäßes optisches System aufweist. Besonders geeignet ist die Leuchte dabei als Deckenleuchte gestaltet, insbesondere als Arbeitsplatzleuchte. Vorzugsweise ist dabei durch die Lichtaustrittsöffnung des Reflektors eine Lichtaustrittsöffnung der Leuchte beschrieben. Das ist vorteilhaft mit Bezug auf den lichttechnischen Wirkungsgrad der Leuchte.

Die Erfindung wird im Folgenden anhand eines Ausführungsbeispiels und mit Bezug auf die Zeichnungen näher erläutert. Es zeigen:
- Fig. 1: eine Querschnitt-Skizze zu einem erfindungsgemäßen optischen System,
- Fig. 2: Skizzen zu zwei unterschiedlichen Formgestaltungsmöglichkeiten des optischen Systems,
- Fig. 3: eine, der Fig. 1 entsprechende Skizze zur Verdeutlichung der Erzielung eines Mindestabschirmwinkels,
- Fig. 4a: eine Skizze zu einer möglichen erzielbaren Leuchtdichteverteilung im Fall eines glockenförmigen Reflektors und
- Fig. 4b: eine entsprechende Skizze im Fall eines kegelabschnittförmigen Reflektors.

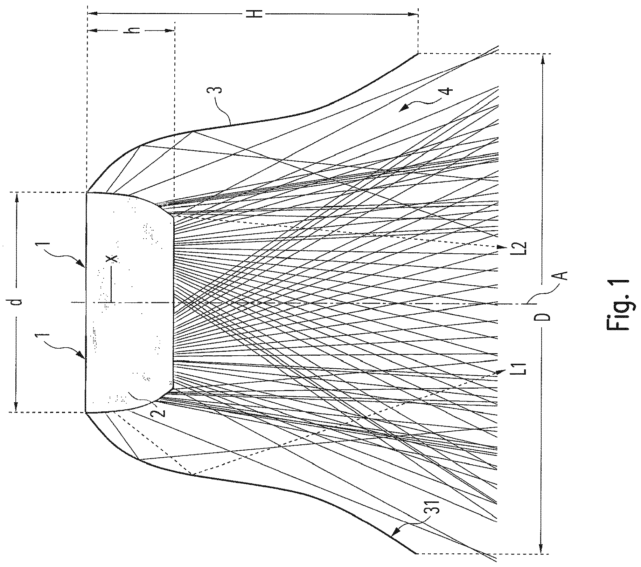

Fig. 1 zeigt eine Querschnitt-Skizze zu einem erfindungsgemäßen optischen System. Das optische System ist zur Beeinflussung eines von einer LED-Lichtquelle 1 erzeugten Lichts ausgestaltet. Das System umfasst eine Linse 2 zur Beeinflussung des Lichts und einen topfartigen Reflektor 3.

Der Reflektor 3 ist so gestaltet, dass durch seine Form eine Hauptachse A festgelegt ist. Der Reflektor 3 erstreckt sich um diese Hauptachse A herum und weist nach innen weisende, reflektierende Flächenbereiche 31 auf. Vorzugsweise ist der gesamte, mit Bezug auf die Hauptachse A nach innen weisende Oberflächenbereich des Reflektors 3 ausschließlich durch die reflektierenden Flächenbereiche 31 gebildet.

Die Erstreckung des Reflektors 3 entlang der Hauptachse *A* wird hier als Höhe *H* des Reflektors 3 bezeichnet.

Mit Bezug auf die Hauptachse A ist auf einer ersten Seite durch den Reflektor 3 eine Lichtaustrittsöffnung 4 gebildet. In dieser Beschreibung wird davon ausgegangen, dass der Reflektor 3 so orientiert ist, dass die Hauptachse A vertikal verläuft und die erste Seite nach unten weist, also die Lichtaustrittsöffnung 4 nach unten weist. Allerdings kann das optische System grundsätzlich auch dafür vorgesehen bzw. gestaltet sein, für einen Betrieb anderweitig gegenüber der Vertikalen ausgerichtet zu sein. Die Richtungsangaben etc. in der vorliegenden Beschreibung sind in einem solchen Fall entsprechend umzudeuten.

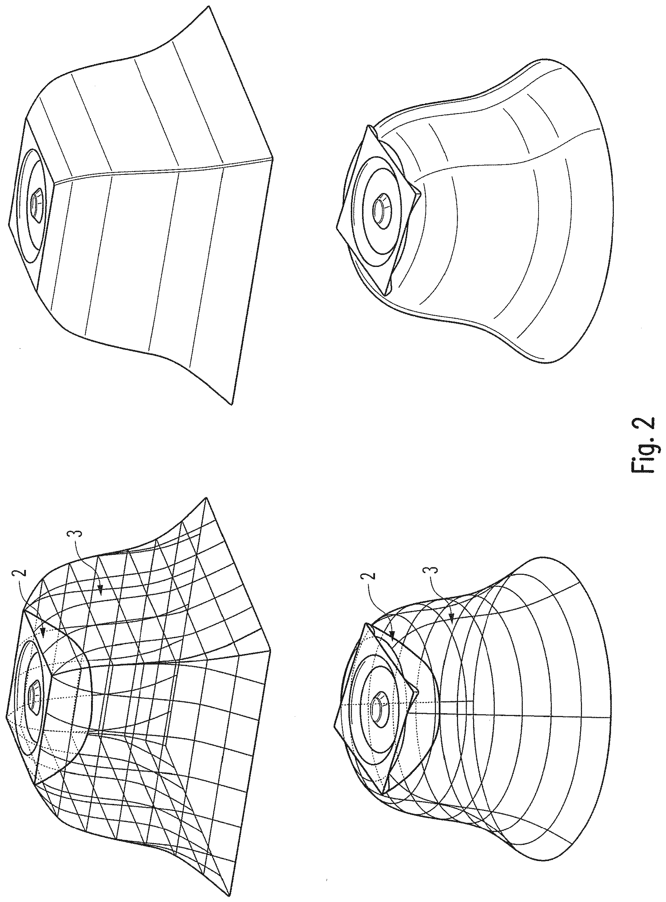

Wie in Fig. 2, unten angedeutet, ist der Reflektor 3 mit Bezug auf die Hauptachse A rotationssymmetrisch geformt oder weist - wie in Fig. 2, oben angedeutet - in einem Querschnitt normal zu der Hauptachse A eine mehreckige, beispielsweise quadratische Form auf.

Die Linse 2 ist dabei auf einer, der ersten Seite gegenüberliegenden zweiten Seite des Reflektors 3 bzw. oben am Reflektor 3 angeordnet. Die Gestaltung ist dabei derart, dass das Licht nach Austritt aus der Linse 2 einen Weg zu der Lichtaustrittsöffnung 4 zurücklegt und anschließend durch Letztere hindurch den Reflektor 3 verlässt. Insbesondere ist erfindungsgemäß die Linse 2 die Hauptachse A durchsetzend angeordnet.

Erfindungsgemäß ist der Reflektor 3 derart angeordnet, dass die reflektierenden Flächenbereiche 31 teilweise die Linse 2 ringartig umgeben, und zwar entlang eines Abschnitts *h* der Hauptachse *A.* Dieser Abschnitt *h* kann insbesondere der Erstreckung der Linse 2 parallel zur Hauptachse A entsprechen. Mit Bezug auf die Dimensionierung ist erfindungsgemäß vorgesehen, dass folgende Relation gilt: *0,2 H* < *h* < *0,3 H.*

Der Reflektor 3 kann an seinem, zur zweiten Seite weisenden bzw. oberen Endbereich eine Öffnung aufweisen, in welche die Linse 2 eingesetzt ist. Vorzugsweise ist die Gestaltung derart, dass die Linse 2 unmittelbar an die reflektierenden Flächenbereiche 31 des Reflektors 3 angrenzend angeordnet ist.

Weiterhin ist der Reflektor 3 derart gestaltet, dass - in einem Schnitt durch die Hauptachse *A* betrachtet - die Erstreckung *d* der Linse 2 normal zu der Hauptachse *A* wenigstens 40% der Erstreckung D der Lichtaustrittsöffnung 4 beträgt. Auf diese Weise lässt sich besonders geeignet erzielen, dass derjenige Oberflächenbereich der Linse 2, über den das Licht die Linse verlässt, vergleichsweise groß ist. Hierdurch ist eine besonders geeignete Lichtbeeinflussung ermöglicht; zudem lässt sich auf diese Weise die Gefahr einer potenziellen Blendung eines Betrachters durch eine sehr hohe lokale Leuchtdichte reduzieren.

Eine erfindungsgemäße Leuchte umfasst außer dem optischen System die LED-Lichtquelle 1. Die LED-Lichtquelle 1 kann eine LED oder mehrere, insbesondere in einem Cluster angeordnete, LEDs umfassen. Die LEDs können dabei - beispielsweise auf einer Platine - derart angeordnet sein, dass sie eine, zur Hauptachse A normal orientierte Ebene durchsetzen. Die Leuchte kann als Innenraumleuchte gestaltet sein. Die Leuchte kann beispielsweise als Deckenleuchte oder als Stehleuchte ausgebildet sein und insbesondere zur Beleuchtung einer im Wesentlichen horizontalen Arbeitsfläche dienen, also als Arbeitsplatzleuchte gestaltet sein. Auf dieser Arbeitsfläche lässt sich mit dem von der Leuchte abgegebenen Licht ein besonders geeignetes und angenehm wirkendes Lichterscheinungsbild erzeugen.

Die Leuchte kann auch mehrere entsprechende optische Systeme und mehrere entsprechende LED-Lichtquellen aufweisen, wobei jeder der LED-Lichtquellen eines der optischen Systeme zugeordnet ist. Insbesondere kann die Leuchte so gestaltet sein, dass die Reflektoren der optischen Systeme in einer Ebene angeordnet sind und eine Rasteranordnung bilden. Vorzugsweise sind dabei die optischen Systeme baugleich gestaltet. Auch die LED-Lichtquellen können baugleich gestaltet sein. Dabei kann im Weiteren vorgesehen sein, dass die Leuchte zum Betrieb derart ausgerichtet wird, dass die Reflektoren eine horizontale Ebene durchsetzend angeordnet sind und eine Lichtabgabe der Leuchte durch die Rasteranordnung nach unten erfolgt.

Vorzugsweise ist die Gestaltung der Leuchte derart, dass durch die Lichtaustrittsöffnung 4 bzw. gegebenenfalls durch die Lichtaustrittsöffnungen eine Lichtaustrittsöffnung der Leuchte beschrieben ist. Auf diese Weise lässt sich vermeiden, dass das Licht nach Durchtritt durch die Lichtaustrittsöffnung 4 durch weitere Leuchtenbauteile beeinflusst wird.

Das optische System ist relativ zu der LED-Lichtquelle 1 so angeordnet, dass das von der LED-Lichtquelle 1 erzeugte und abgegebene Licht von oben her in die Linse 2 eingestrahlt wird, die Linse 2 durchsetzt und Letztere durch nach unten und auf die Seiten weisende Oberflächenbereiche der Linse 2 wieder verlässt. Wie bereits erwähnt, legt das Licht dann nach seinem Austritt aus der Linse 2 einen Weg zu der Lichtaustrittsöffnung 4 des Reflektors 3 zurück. Dabei umfasst das Licht - wie in Fig. 1 exemplarisch mit einem ersten Lichtstrahl *L1* angedeutet - erste Lichtstrahlen, die auf diesem Weg an den reflektierenden Flächenbereichen 31 des Reflektors 3 reflektiert bzw. gestreut werden, sowie - wie in Fig. 1 exemplarisch mit einem zweiten Lichtstrahl *L2* angedeutet - zweite Lichtstrahlen, die auf diesem Weg nicht an den reflektierenden Flächenbereichen 31 des Reflektors 3 reflektiert werden.

Das optische System ist derart gestaltet, dass das Licht auf dem Weg zwischen der Linse 2 und der Lichtaustrittsöffnung 4 zu einem überwiegenden Teil nicht an den reflektierenden Flächenbereichen 31 des Reflektors 3 reflektiert wird und lediglich zu einem weiteren, kleineren Teil an den reflektierenden Flächenbereichen 31 des Reflektors 3 reflektiert bzw. gestreut wird. Wenn man, wie in Fig. 1 beispielhaft gezeigt, das Licht auf seinem Weg zwischen der Linse 2 und der Lichtaustrittsöffnung 4 durch Lichtstrahlen repräsentiert, und zwar so, dass die Dichte der Lichtstrahlen ein Maß für die Intensität des Lichts darstellt, so gibt es dementsprechend mehr zweite Lichtstrahlen *L2* und weniger erste Lichtstrahlen *L1.* Mit anderen Worten können sich insbesondere die Ausdrücke "überwiegender Teil" und "weiterer, kleinerer Teil" auf die Intensität des Lichts beziehen.

Beispielsweise kann vorgesehen sein, dass der überwiegende Teil wenigstens 80% beträgt, vorzugsweise wenigstens 90%. Der weitere, kleinere Teil kann beispielsweise zwischen 1% und 9% betragen, vorzugsweise zwischen 3% und 7%.

Durch diese Gestaltung lässt sich erzielen, dass die durch das optische System bewirkte Lichtverteilung in erster Linie durch die Linse 2 bestimmt wird. Der Reflektor 3 hat demgegenüber einen geringen Einfluss hierauf.

Um einen entsprechend großen Einfluss der Linse 2 geeignet zu realisieren, ist vorzugsweise vorgesehen, dass die Linse 2 aus einem klaren Material besteht. Beispielsweise kann die Linse 2 aus Kunststoff oder Glas bestehen. Durch die Verwendung eines klaren Materials lässt sich auch vermeiden, dass es in der Linse 2 zu einer nennenswerten Streuung des Lichts kommt.

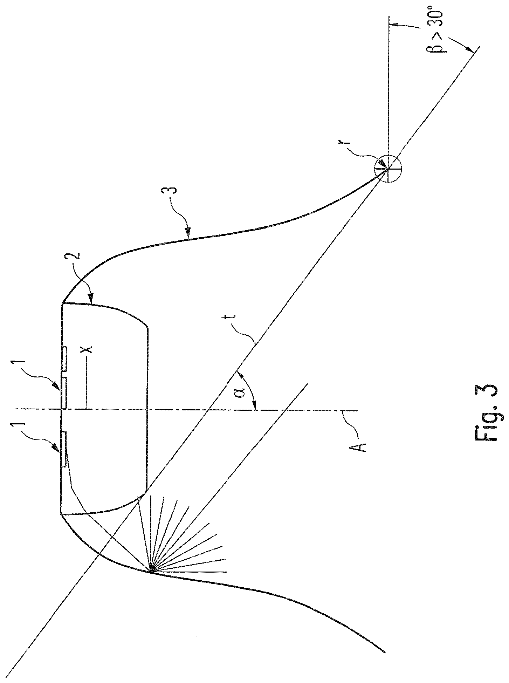

Dennoch lassen sich mit dem Reflektor 3 insbesondere vorteilhaft die drei folgenden Effekte mit Bezug auf die Lichtverteilung erzielen:
Durch entsprechende Formgebung des Reflektors 3 und der Linse 2 lässt sich - wie in Fig. 3 schematisch angedeutet - geeignet ein Mindestabschirmwinkel *β* des optischen Systems erzielen, durch den sich eine unerwünschte potenzielle Blendung eines Betrachters vermeiden lässt. Hierzu ist die Gestaltung vorzugsweise derart, dass - in einem Schnitt durch die Hauptachse *A* betrachtet - eine, die Linse 2 berührende Tangente *t,* die auf der gegenüberliegenden Seite der Hauptachse *A* durch den Randpunkt *r* der Lichtaustrittsöffnung 4 gelegt ist, mit der Hauptachse *A* einen Winkel *α* einschließt, der höchstens *90° ― β* beträgt. Wenn der Mindestabschirmwinkel *β* also beispielsweise entsprechend gängiger Norm, mindestens 30° beträgt, so ist das optische System vorzugsweise geometrisch so gestaltet, dass der Winkel *α* maximal 60° beträgt.

Durch den Reflektor 3 lässt sich weiterhin bewirken, dass in dem Lichterscheinungsbild, das mit dem von einer entsprechenden Leuchte abgegebenen Licht erzeugt werden kann - beispielsweise auf einer entsprechend beleuchteten Arbeitsfläche - harte Schatten vermieden werden oder doch zumindest deutlich reduziert sind. Dies kann insbesondere dadurch erzielt werden, dass der auf die reflektierenden Flächenbereiche 31 des Reflektors 3 auftreffende Teil des Lichts, also der weitere, kleinere Teil des Lichts an den Flächenbereichen 31 leicht aufgestreut wird, also diffus reflektiert wird. Vorzugsweise sind hierzu dementsprechend die Flächenbereiche 31 diffus reflektierend bzw. streuend gestaltet, insbesondere können die Flächenbereiche 31 weiß gestaltet sein. Herstellungstechnisch vorteilhaft kann der Reflektor 3 aus einem weißen Material gefertigt sein.

Der genannte Effekt lässt sich insbesondere auch im Fall einer erfindungsgemäßen Leuchte erzielen, die die oben genannte Rasteranordnung aufweist. In diesem Fall besteht grundsätzlich die Wahrscheinlichkeit, dass durch Multischatten Kanten gebildet werden; diese lassen sich durch die erfindungsgemäße Gestaltung dementsprechend vermeiden oder zumindest reduzieren.

Der Reflektor 3 kann beispielsweise aus Kunststoff oder einem lackierten oder anderweitig beschichteten Material bestehen bzw. gefertigt sein. Insbesondere können die reflektierenden Flächen 31 durch eine Beschichtung gebildet sein, etwa durch eine Lackierung oder eine Pulverbeschichtung.

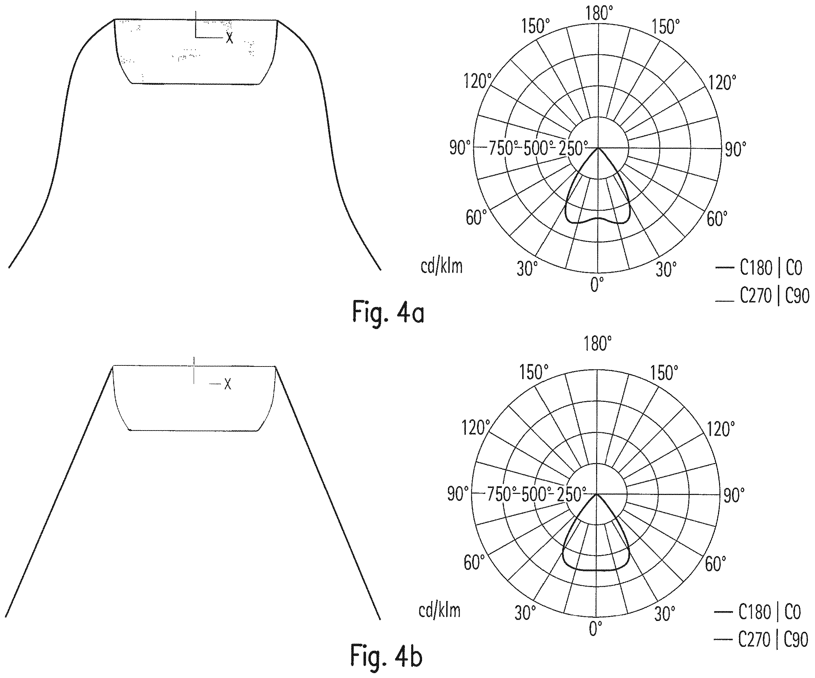

In erster Linie ist die Lichtverteilung also durch die Linse 2 bewirkt; allerdings lässt sich dabei durch den Reflektor 3 eine "Feinabstimmung" der Lichtverteilung bewirken, insbesondere durch entsprechende Formgebung des Reflektors 3. Wie in Fig. 1 und auch in Fig. 4a, links exemplarisch skizziert, kann der Reflektor 3 beispielsweise so gestaltet sein, dass in einem Schnitt durch die Hauptachse *A* die reflektierenden Flächenbereiche 31 eine Glockenform beschreiben. Wie in Fig. 4b, links skizziert, kann alternativ die Formgebung beispielsweise so sein, dass die reflektierenden Flächenbereiche 31 hierbei eine Trapezform beschreiben; insgesamt können in diesem Fall also die Flächenbereiche 31 eine Kegelabschnittform beschreiben. In einem Querschnitt normal zu der Hauptachse *A* kann der Reflektor beispielsweise eine quadratische, rechteckige oder elliptische Form, insbesondere auch eine Kreisform aufweisen. Die entsprechenden Einflüsse auf die Lichtverteilungskurve sind dementsprechend in den Figuren 4a, rechts und 4b, rechts gezeigt. Während eine Glockenform zu einer Ausbildung einer leicht ausgeprägten zweiflügeligen "Batwing-Verteilung" führt, ist im Fall der trapezförmigen bzw. kegelabschnittförmigen Gestaltung im Vergleich hierzu die zweiflügelige Ausprägung schwächer. Es wird dann mehr Licht in den Bereich zwischen die beiden "Flügel" gelenkt.

Auch kann beispielsweise durch entsprechende Formgebung des Reflektors 3 das Streulicht oberhalb von 65° leicht reduziert werden, um Leuchtdichten zu reduzieren.

Wie oben angegeben, kann der Reflektor 3 so gestaltet sein, dass das Licht an den reflektierenden Flächenbereichen 31 diffus reflektiert bzw. gestreut wird. Allerdings ist es alternativ auch möglich, dass die Flächenbereiche 31 spiegelnd reflektierend gestaltet sind. Auf diese Weise lässt sich gegebenenfalls eine weiterhin verbesserte Entblendung erzielen bzw. es kann noch mehr Einfluss auf die Charakteristik der Abstrahlung genommen werden.

Mit Bezug auf eine gemeinsame Wirkung der Linse 2 und des Reflektors 3 sei schließlich angemerkt, dass grundsätzlich die Linse 2 umso klarer sein sollte, je stärker diffus der Reflektor 3 wirkt. Wenn die Linse 2 jedoch selbst gewisse streuende Eigenschaften aufweist, beispielsweise durch eingelagerte Streupartikel, sollte der Reflektor 3 entsprechend weniger diffus wirkend gestaltet sein.

## Patentansprüche

1. Optisches System zur Beeinflussung eines, von einer LED-Lichtquelle (1) abgegebenen Lichts, aufweisend
- eine Linse (2) zur Beeinflussung des Lichts und
- einen topfartigen Reflektor (3), durch dessen Form eine Hauptachse (*A*) festgelegt ist, wobei der Reflektor (3) nach innen weisende, reflektierende Flächenbereiche (31) aufweist und mit Bezug auf die Hauptachse (*A*) auf einer ersten Seite eine Lichtaustrittsöffnung (4) bildet,
wobei die Linse (2) auf einer, der ersten Seite gegenüberliegenden zweiten Seite des Reflektors (3) angeordnet ist, derart, dass das Licht nach Austritt aus der Linse (2) einen Weg zu der Lichtaustrittsöffnung (4) zurücklegt und anschließend durch Letztere hindurch den Reflektor (3) verlässt,
wobei das optische System derart gestaltet ist, dass das Licht auf dem Weg zwischen der Linse (2) und der Lichtaustrittsöffnung (4) zu einem überwiegenden Teil nicht an den reflektierenden Flächenbereichen (31) des Reflektors (3) reflektiert wird und lediglich zu einem weiteren, kleineren Teil an den reflektierenden Flächenbereichen (31) des Reflektors (3) reflektiert wird,
wobei der Reflektor (3) derart angeordnet ist, dass die reflektierenden Flächenbereiche (31) teilweise die Linse (2) ringartig umgeben, und wobei der Reflektor (3) mit Bezug auf die Hauptachse (A) rotationssymmetrisch geformt ist oder in einem Querschnitt normal zu der Hauptachse (A) eine quadratische, rechteckige oder elliptische Form aufweist,
**dadurch gekennzeichnet,**
**dass** die Linse (2) die Hauptachse (A) durchsetzend angeordnet ist, wobei der Reflektor (3) so gestaltet ist, dass in einem Schnitt durch die Hauptachse (*A*) die reflektierenden Flächenbereiche (31) eine Glockenform beschreiben, und
wobei für die Erstreckung (h) der Linse (2) parallel zur Hauptachse (A) gilt:
0,2H < h < 0,3 H, wobei H der Erstreckung des Reflektors (3) entlang der Hauptachse (A) entspricht, und
wobei - in einem Schnitt durch die Hauptachse (*A*) betrachtet - die Erstreckung (*d*) der Linse (2) normal zu der Hauptachse (*A*) wenigstens 40% der Erstreckung (*D*) der Lichtaustrittsöffnung (4) beträgt.

2. Optisches System nach Anspruch 1,
bei dem der Anteil des überwiegenden Teils des Lichts wenigstens 80% beträgt, vorzugsweise wenigstens 90%.

3. Optisches System nach Anspruch 1 oder 2,
bei dem der weitere kleinere Teil des Lichts zwischen 1% und 9% beträgt, vorzugsweise zwischen 3% und 7%.

4. Optisches System nach einem der vorhergehenden Ansprüche,
bei dem die reflektierenden Flächenbereiche (31) des Reflektors (3) diffus reflektierend sind oder spiegelnd reflektierend sind.

5. Optisches System nach einem der vorhergehenden Ansprüche,
bei dem die reflektierenden Flächenbereiche (31) des Reflektors (3) weiß sind.

6. Optisches System nach einem der vorhergehenden Ansprüche,
bei dem die reflektierenden Flächenbereiche (31) des Reflektors (3) durch eine Beschichtung gebildet sind, insbesondere durch eine Lackierung oder eine Pulverbeschichtung.

7. Optisches System nach einem der vorhergehenden Ansprüche,
bei dem die Linse (2) aus einem klaren Material besteht, insbesondere aus Kunststoff oder Glas.

8. Optisches System nach einem der vorhergehenden Ansprüche,
das derart gestaltet ist, dass - in einem Schnitt durch die Hauptachse (*A*) betrachtet - eine die Linse (2) berührende Tangente (*t*), die auf der gegenüberliegenden Seite der Hauptachse (*A*) durch den Randpunkt (*r*) der Lichtaustrittsöffnung (4) gelegt ist, mit der Hauptachse *(A)* einen Winkel (*α*) einschließt, der höchstens 60° beträgt.

9. Leuchte, aufweisend
- eine LED-Lichtquelle (1) und
- ein optisches System nach einem der vorhergehenden Ansprüche.

10. Leuchte nach Anspruch 9,
in Form einer Deckenleuchte, insbesondere einer Arbeitsplatzleuchte.

11. Leuchte nach Anspruch 9 oder 10,
bei der durch die Lichtaustrittsöffnung (4) des Reflektors (3) eine Lichtaustrittsöffnung der Leuchte beschrieben ist.

## Claims

1. Optical system for influencing a light emitted by an LED light source (1), comprising
- a lens (2) for influencing the light and
- a pot-shaped reflector (3), the shape of which defines a main axis (*A*), wherein the reflector (3) comprises inward-facing reflective surface regions (31) and forms a light exit opening (4) with respect to the main axis (*A*) on a first side, wherein the lens (2) is disposed on a second side of the reflector (3) opposite to the first side such that, after exiting the lens (2), the light travels a path to the light exit opening (4) and then leaves the reflector (3) through said light exit opening,
wherein the optical system is designed in such a way that a predominant portion of the light on the path between the lens (2) and the light exit opening (4) is not reflected at the reflective surface regions (31) of the reflector (3) and only a further, smaller portion of said light is reflected at the reflective surface regions (31) of the reflector (3), wherein the reflector (3) is arranged such that the reflective surface regions (31) partially surround the lens (2) in a ring-like manner, and wherein the reflector (3) is shaped rotationally symmetrically with respect to the main axis (A) or has a square, rectangular or elliptical shape in a cross-section normal to the main axis (A), **characterised in that** the lens (2) is disposed such that it passes through the main axis (*A*),
wherein the reflector (3) is designed such that, in a section through the main axis (*A*), the reflective surface regions (31) describe a bell shape, and
wherein the following applies for the extension (h) of the lens (2) parallel to the main axis (A):
0.2 H < h < 0.3 H, wherein H corresponds to the extension of the reflector (3) along the main axis (A), and
wherein, viewed in a section through the main axis (*A*), the extension (*d*) of the lens (2) normal to the main axis (*A*) is at least 40% of the extension (*D*) of the light exit opening (4) .

2. Optical system according to Claim 1,
in which the proportion of the predominant portion of the light is at least 80%, preferably at least 90%.

3. Optical system according to Claim 1 or 2,
in which the further smaller portion of the light is between 1% and 9%, preferably between 3% and 7%.

4. Optical system according to any one of the preceding claims,
in which the reflective surface regions (31) of the reflector (3) are diffusely reflective or specularly reflective.

5. Optical system according to any one of the preceding claims,
in which the reflective surface regions (31) of the reflector (3) are white.

6. Optical system according to any one of the preceding claims,
in which the reflective surface regions (31) of the reflector (3) are formed by a coating, in particular by a lacquer or a powder coating.

7. Optical system according to any one of the preceding claims,
in which the lens (2) consists of a clear material, in particular plastic or glass.

8. Optical system according to any one of the preceding claims, which is designed such that, viewed in a section through the main axis (*A*), a tangent (*t*) which touches the lens (2) and is placed on the opposite side of the main axis (*A*) through the marginal point (*r*) of the light exit opening (4) forms an angle (*α*) with the main axis (*A*) that is at most 60°.

9. Lamp comprising
- an LED light source (1) and
- an optical system according to any one of the preceding claims.

10. Lamp according to Claim 9,
in the form of a ceiling lamp, in particular a workplace lamp.

11. Lamp according to Claim 9 or 10,
in which a light exit opening of the lamp is described by the light exit opening (4) of the reflector (3).

## Revendications

1. Système optique destiné à influer sur une lumière émise par une source lumineuse à LED (1), présentant
- une lentille (2) destinée à influer sur la lumière, et
- un réflecteur (3) en forme de pot dont la forme définit un axe principal (*A*), ledit réflecteur (3) présentant des parties de surface (31) réfléchissantes orientées vers l'intérieur, et formant, sur une première face, une ouverture de sortie de lumière (4) par rapport à l'axe principal (*A*),
ladite lentille (2) étant disposée sur une deuxième face du réflecteur (3) opposée à la première face de telle manière que la lumière, après être sortie de la lentille (2), parcourt un chemin menant à l'ouverture de sortie de lumière (4) puis sort du réflecteur (3) à travers cette dernière,
ledit système optique étant conçu de manière à que , sur le chemin menant de la lentille (2) vers l'ouverture de sortie de lumière (4), la majeure partie de la lumière ne soit pas réfléchie sur les zones de surface réfléchissantes (31) du réflecteur (3) et que seule une petite partie supplémentaire en soit réfléchie sur les zones de surface réfléchissantes (31) du réflecteur (3),
ledit réflecteur (3) étant disposé de telle manière que les zones de surface réfléchissantes (31) entourent en partie la lentille (2) de manière circulaire, et ledit réflecteur (3) étant d'une forme symétrique en rotation par rapport à l'axe principal (A) ou présentant une forme carrée, rectangulaire ou elliptique, vu en coupe transversale perpendiculaire à l'axe principal (A), **caractérisé en ce que**
la lentille (2) est traversée par l'axe principal (*A*),
ledit réflecteur (3) étant conçu de telle manière que les zones de surface réfléchissantes (31) définissent une forme de cloche, selon une vue en coupe passant par l'axe principal (*A*), et
l'étendue (h) de ladite lentille (2) parallèle à l'axe principal (A) correspondant à :
0,2 H < h < 0,3 H, H correspondant à l'étendue du réflecteur (3) le long de l'axe principal (A), et
l'étendue (*d*) de la lentille (2), perpendiculairement à l'axe principal (*A*), représentant, selon une vue en coupe passant par l'axe principal (*A*), au moins 40 % de l'étendue (*D*) de l'ouverture de sortie de lumière (4).

2. Système optique selon la revendication 1,
dans lequel la proportion de ladite majeure partie de la lumière représente au moins 80 %, de préférence au moins 90 %.

3. Système optique selon la revendication 1 ou 2,
dans lequel ladite petite partie supplémentaire de la lumière représente entre 1 % et 9 %, de préférence entre 3 % et 7 %.

4. Système optique selon l'une des revendications précédentes, dans lequel les zones de surface réfléchissantes (31) du réflecteur (3) sont réfléchissantes de manière diffuse ou sont réfléchissantes de manière miroitante.

5. Système optique selon l'une des revendications précédentes, dans lequel les zones de surface réfléchissantes (31) du réflecteur (3) sont blanches.

6. Système optique selon l'une des revendications précédentes, dans lequel les zones de surface réfléchissantes (31) du réflecteur (3) sont formées par un revêtement, notamment par un vernis ou un revêtement en poudre.

7. Système optique selon l'une des revendications précédentes, dans lequel la lentille (2) se compose d'un matériau transparent, notamment en plastique ou en verre.

8. Système optique selon l'une des revendications précédentes, conçu de telle manière que, selon une vue en coupe passant par l'axe principal (*A*), une tangente (*t*) en contact avec la lentille (2) et passant par un point de bord (*r*) de l'ouverture de sortie de lumière (4) situé de l'autre côté de l'axe principal (*A*) forme un angle (*α*) de 60° maximum avec l'axe principal (*A*)*.*

9. Luminaire présentant
- une source lumineuse à LED (1), et
- un système optique selon l'une des revendications précédentes.

10. Luminaire selon la revendication 9,
sous forme de lampe de plafond, notamment pour poste de travail.

11. Luminaire selon la revendication 9 ou 10,
dans lequel l'ouverture de sortie de lumière du luminaire est définie par l'ouverture de sortie de lumière (4) du réflecteur (3) .
